# EUROPEAN PATENT APPLICATION

(11) **EP 1 652 436 A1**
(43) Date of publication of application: **03.05.2006**
(21) Application number: 05256510.8
(22) Date of filing: 20.10.2005
(51) Int. Cl.: A23L 1/236, A23L 1/308, A23L 1/0528, A23L 1/09, A23G 1/40, A23G 1/46

(54) **Sugar substitute and bulking agent and chocolate**

(30) Priority: 22.10.2004 US 971264; 23.12.2004 US 20742; 05.10.2005 US 244026
(71) Applicant: Sweet Sue, LLC, Boynton Beach, Florida 33437 (US)
(72) Inventor: Goldman, Fred, Boynton Beach Florida 33437 (US)
(74) Representative: Reeve, Anna Elizabeth

(57) **Abstract**

The invention relates to a solid, low calorie, palatable sugar substitute with the following ingredients, by weight: inulin 21.6 % - 48.3%; polydextrose 21.6 % - 59.0%; maltodextrin 2.0 % - 48.0%; trace amounts of an antiagglomerant, and the balance being one or more intense sweeteners, for example, sucralose or acesulfame-K or a combination of acesulfame-K and neohesperidin dihydrochalone. A solid, low calorie, chocolate comestible is provided as follows: inulin 12.0 - 20.0%; polydextrose 15.0 - 25.0%; maltodextrin 2.0 - 8.0%; milk 0 - 22% dependent upon flavor (dark, milk, etc.); cocoa mass 10 - 50% dependent upon flavor; cocoa butter 8-25% dependent upon flavor; trace amounts of lecithin and flavor; and the balance being one or more intense sweeteners such as aspartame, acesulfame-K or sucralose or a combination of acesulfame-K and neohesperidin dihydrochalone. Milk chocolate, dark chocolate and methods of making comestibles with the sugar substitute are also disclosed.

## Description

### Technical Field

The present invention relates to a low calorie sugar substitute and bulking agent and chocolates made with the sugar substitute and bulking agent.

### Background

In addition to sweetness, sugar typically provides bulk to comestibles (edible products). It also reduces the water activity in baked goods by immobilizing water. It acts as a humectant to thereby affect the moisture of the finished product. It also affects the gelatinization temperature of starches during baking. Sugar plays a significant role in the structure, volume, and tenderness of the finished product.

There is a need in the marketplace for a low calorie sugar substitute that also contains a bulking agent which has a low glycemic value and preferably high in fiber.

High intensity sweeteners can provide the sweetness of sugar (although sometimes with a slightly different taste) but such high intensity sweeteners are many times sweeter than sugar. Therefore, only a small amount of high intensity sweetener is utilized. If a homemaker or a food manufacturer seeks to utilize high intensity sweeteners, he or she must revise all sugar containing recipes for food products. Further the bulking agent, which is part of common sugar, must be replaced in the recipe. Sugar also provides additional features such as a browning agent to food products. High intensity sweeteners lack that browning characteristic.

U.S. Patent No. 6,423,358 to Barndt states that sucralose may be combined with other bulking agents such as maltodextrin or polydextrose or oligosaccharide and co-dried or spray-dried on inulin to produce a low calorie, palatable fiber- containing sugar substitute. However, the combination- inulin and maltodextrin and polydextrose and the specific ranges of inulin, polydextrose, and maltodextrin are not discussed nor identified in the prior art. U.S. Patent No. 6,423,358 to Barndt teaches away from the use of polydextrose and states that the composition "does not participate in the browning reactions that are desirable..."

One of the primary goals of the present invention was to develop a low glycemic value and high fiber, sugar substitute and bulking agent which eliminated, avoided or reduced the laxative effect and the flatulence effect of commonly used sugar alcohols such as maltitol. These sugar alcohols also exhibited a hygroscopic nature which impaired their use and required recipe adjustments to use them. Each of these compositions (inulin, maltodextrin and polydextrose) when used in certain large quantities, have been found to produce minor laxative effects in certain individuals but nowhere near the level of sugar alcohols.

### Disclosure of the Invention

The invention relates to a solid, low calorie, palatable sugar substitute with the following ingredients, by weight:

| | |
|---|---|
| inulin | 21.6% - 48.3% |
| polydextrose | 21.6% - 59% |
| maltodextrin | 2% - 48% |

trace amounts of an antiagglomerant, and the balance being one or more intense sweeteners from the group of sweeteners/flavors comprising aspartame, acesulfame-K, cyclamates, saccharin, sucralose, neohesperidin dihydrochalone, alitame, stevia sweeteners, glycyrrhizin, thaumatin, and xylotol and the like, preferably acesulfame-K 0.2 % and neohesperidin dihydrochalone 1.0 %. Secondarily, 0.2% sucralose may be used. Additional sweeteners such as Lo Han, neotame, tagatose and trehalose may be used. Both Inulin and Polydextrose are noted as having low glycemic index values and high in fiber.

Higher quality results are achieved with a solid, low calorie, palatable sugar substitute having the following ingredients, by weight:

| | |
|---|---|
| inulin | 31.6% - 38.3% |
| polydextrose | 31.6% - 49% |
| maltodextrin | 12% - 36% |

trace amounts of an antiagglomerant, and the balance being one or more intense sweeteners as listed above.

In addition, a solid, low calorie, chocolate comestible is provided as follows:

| | |
|---|---|
| inulin | 12.0 - 20.0% |
| polydextrose | 15.0 - 25.0% |
| maltodextrin | 2.0 - 8.0% |
| milk | 0 - 22% dependent upon flavor (dark, milk, etc.) |
| cocoa mass | 10 - 50% dependent upon flavor (dark, milk, etc.) |
| cocoa butter | 8-25% dependent upon flavor |

trace amounts of lecithin and flavor; and the balance being one or more intense sweeteners from the group of sweeteners comprising aspartame, acesulfame-K (Ace K), cyclamates, saccharin, sucralose, neohesperidin dihydrochalone, alitame, stevia sweeteners, glycyrrhizin, xylotol and thaumatin (preferably acesulfame-K and neohesperidin dihydrochalone), and the like. Sucralose may be used secondarily at 0.04 % by weight. Additional sweeteners such as Lo Han, neotame, tagatose and trehalose may be used.

The combination of inulin, maltodextrin and polydextrose has been found to reduce or eliminate laxative effects and/or the flatulence effects of large amounts of: inulin used as a bulking agent, or maltodextrin used as a bulking agent, or polydextrose used as a bulking agent, with other sugar substitutes.

Further, the inventors sought to develop a bulking and browning agent to be used with a sugar substitute (such as an intense sweetener) and to replace maltodextrin and sugar alcohols or other high intensity sweeteners and to reduce or eliminate the laxative effect and/or the flatulence effect of high quantities of inulin when used with sugar substitutes, polydextrose when used with sugar substitutes. Additionally, a reduction of the amount of maltodextrin in turn reduces the glycemic index of the entire sugar substitute and further reduces the calorie count of the product.

A further advantage of the present invention is the use of several high intensity sweeteners used in combination, preferably acesulfame-K and neohesperidin dihydrochalone, provide both a short term sweetness and a long term sweetness in the mouth without a metallic after taste that either one of these high intensity sweeteners creates. The same can be said for combinations of Ace K with sucralose, aspartame etc. and other combinations of high intensity sweeteners.

### Best Mode for Carrying Out the Invention

Inulins are polysaccharides belonging to the polyfructan group and occur in many different plants including, for example, Jerusalem artichokes, dahlia tubers, and chicory roots. Inulin fulfills many non-sweetener functions of sugar. It is also palatable and a soluble food fiber. The goal in designing this new sugar substitute and bulking agent and low calorie chocolate candy (as well as hard candy using the sugar substitute) was to replace sugar alcohols (such as maltitol) with a substance which has a lower glycemic index. The glycemic index of a substance is the rate at which the substance is absorbed into a human body compared to glucose (rated 100).

| Glycemic Index Table | |
|---|---|
| sugar | 65 |
| inulin | 1 |
| maltodextrin | 90 |
| polydextrose | 8 |
| acesulfame-K | 50 |
| neohesperidin | 50 |
| lecithin | 15 |
| milk | 40 |
| cocoa mass | 30 |
| cocoa butter | 10 |

It was noted by the inventor that polydextrose had a very low glycemic index. Inulin also has an extremely low glycemic index. Therefore, it was thought that a combination of inulin and polydextrose in a sugar substitute may be worthy of experimentation. However, it was discovered that substances with just inulin and polydextrose did not provide sufficient browning agent activity. The incorporation of a smaller, but still significant, amount of maltodextrin achieved the desired result.

Although the invention can be utilized with a number of high intensity sweeteners, such as aspartame, acesulfame-K, cyclamates, saccharin, sucralose, neohesperidin dihydrochalone, alitame, stevia sweeteners, glycyrrhizin, thaumatin, xylotol, high intensity sweetener combination of acesulfame-K and neohesperidin dihydrochalone (or as a secondarily, sucralose), and the like, also Ace K plus aspartame for low temperature requirements, is preferred in the sugar substitute and bulking agent. Sucralose is sometimes used because typical recipes require thermal processing (baking, retorting, extrusion, for example) and sucralose has relatively high heat stability and has high quality sensory attributes.

The sugar substitute and bulking agent composition can be produced by dry mixing, co-spray drying, co-freeze drying, a glamorization, blending, co-drying, extrusion, or by any other convenient process.

One objective of the present invention is the direct replacement of sugar in some convenient weight or volume measure and in such a manner as to require minimal or no modification of commercial or home use recipes.

The sugar substitute and bulking agent consists of the following:

| | |
|---|---|
| inulin | 31.6% - 38.3% (+/- 10%, that is, 21.6% - 48.3%) |
| polydextrose | 31.6% - 49% (+/- 10%, nominally 21.6% - 59%) |
| maltodextrin | 12% - 36% (+/- 10%, nominally 2% - 48%) |

trace amounts of an antiagglomerant, and the balance being one or more intense sweeteners from the group of sweeteners comprising aspartame, acesulfame-K, cyclamates, saccharin, sucralose, neohesperidin dihydrochalone, alitame, stevia sweeteners, glycyrrhizin, thaumatin, and xylotol, and the like, preferably acesulfame-K 0.2 % and neohesperidin dihydrochalone 1.0 %. Secondarily, 0.2% sucralose may be used rather than acesulfame-K and neohesperidin dihydrochalone. Additional sweeteners such as Lo Han, neotame, tagatose and trehalose may be used.

To increase the solubility, particularly in pudding type mixes and marshmallow production, the following sugar substitute and bulking agent was used which consists of:

| | |
|---|---|
| inulin | 31.6% |
| polydextrose | 31.6% |
| maltodextrin | 36% |

with the balance being anticaking agents and high intensity sweeteners as previously identified. Although this mix will have a slightly higher calorie count and glycemic index, these values will still be below all comparable alternatives. This mix is also more economical to produce due to lower component costs.

Preferably, the sugar substitute and bulking agent has the following composition.

| | |
|---|---|
| Sugar Substitute and Bulking Agent (% by weight) inulin | 37.9 % |
| maltodextrin | 23.0 % |
| polydextrose | 37.6 % |
| antiagglomerant | 0.3 % (preferably tricalcium phosphate) |
| acesulfame-K | 0.2 % |
| neohesperidin dihydrochalone | 1.0 % |

The sugar substitute and bulking agent is made in the following manner. The sugar substitute and bulking agent composition can be produced by dry mixing, co-spray drying, co-freeze drying, a glamorization, blending, co-drying, extrusion, or by any other convenient process.

Experiments have been conducted with the sugar substitute. The following experiments have been made:
Four different standard cake mixes were purchased and then sugar and water added as per instructions. One sample of each mix used sugar, while the other used our sugar replacement. They were then baked as per instructions and tasted after cooling.
In all of the above examples, the product made with the sugar substitute and bulking agent was judged acceptable and a good quality relative to the sugar control.

The presence of maltodextrin in combination with high percentages by weight of inulin and polydextrose, creates sufficient browning activity such that acceptable and good quality baked goods were provided by the sugar substitute and bulking agent. Others have indicated that polydextrose does not participate in browning and is somewhat detrimental in that it is hygroscopic, which means, that it picks up moisture and makes the product sticky. The combination of inulin, maltodextrin and polydextrose seems to reduce or eliminate the laxative effects and/or the flatulence effects of these compositions when the compositions are used separately. Some tests have indicated that this combination also inhibits the absorption of oil during the deep frying process of items such as donuts, further lowering the calorie count of the finished product.

The antiagglomerant used is tricalcium phosphate. The antiagglomerant stops caking of the sugar substitute and bulking agent.

Preferably, 0.2% of acesulfame-K and 1.0% of neohesperidin dihydrochalone by weight is preferable for the high intensity sweetener component.

One objective of the patent applicant was to create a solid, low calorie, chocolate comestible. After numerous experiments and over 25 experimental production runs of solid chocolates with different recipes and percentages of inulin, polydextrose and maltodextrin, the patent applicant identified the following solid, low calorie chocolate comestible with an acceptable taste and texture:

| | Milk Chocolate | Dark Chocolate (% by weight) |
|---|---|---|
| inulin | 15.8 | 15.9 |
| polydextrose | 20.8 | 21.9 |
| maltodextrin | 5.00 | 5.0 |
| lecithin | 0.5 | 0.5 |
| milk | 21.8 | 0 |
| cocoa mass | 10.9 | 46.7 |
| cocoa butter | 24.7 | 9.9 |
| flavor | 0.5 | 0.5 |
| sucralose | 0.04 | 0.04 |

The standard method of conching and making chocolate was employed and only sugar in the recipe was exchanged for our sweetener. Further experiments revealed that rather than use sucralose, the combination of acesulfame-K and neohesperidin dihydrochalone created both short term and long term sweetness in the mouth without a metallic after taste commonly associated with the use of singular high intensity sweeteners. Additional flavorings such as Lo Han, neotame, tagatose, trehalose and stevia sweeteners may be used.

A mixture of 49% polydextrose and 38% inulin and 12% maltodextrin (by weight) has been prepared and used in the manufacture of chocolate within the ranges set forth above.

A solid chocolate made in accordance with the previous recipe was compared against the following control chocolate:
Standard method of conching and making chocolate using sugar in the recipe.
Further, the patent applicant created the following chocolate and also compared the prepared chocolate against the control chocolate:

| Secondary Preferred Chocolate | (% by weight) |
|---|---|
| inulin | 16.50 |
| polydextrose | 20.00 |
| maltodextrin | 5.00 |
| lecithin | 0.30 |
| milk | 22.00 |
| cocoa mass | 11.00 |
| cocoa butter | 25.0 |
| flavor | 0.10 |
| acesulfame-K | 0.025 |
| sucralose | 0.02 |

Both the preferred solid chocolate and the supplementary chocolate was judged acceptable and good quality. The flavor component is known by persons of ordinary skill in the art to enhance the taste of the chocolate. Both chocolates were similar, but the preferred had a superior "mouth feel" after consumption.

The present invention provides a number of advantages, such as the following:
The chocolate and the mix provide the following advantages:
   a) Low caloric level compared to existing items
   b) Low Glycemic Index compared to existing items
   c) Low in High Glycemic ingredients
   d) No Sugar Alcohols and significant reduction of their laxative and flatulence effects
   e) Enables baking mixes to emulate the "with sugar" taste
   f) Comparable in cost and cheaper than many of the existing sweetener alternatives
   g) Will be available in liquid and granular format
   h) High in fiber content.

## Claims

1. A solid, low calorie, palatable sugar substitute **characterizing, by** weight:
| | |
|---|---|
| inulin | 21.6% - 48.3% |
| polydextrose | 21.6% - 59% |
| maltodextrin | 2% - 48% |
trace amounts of an antiagglomerant to reduce caking; and the balance being one or more intense sweeteners from the group of sweeteners comprising aspartame, acesulfame-K, cyclamates, saccharin, sucralose, neohesperidin dihydrochalone, alitame, stevia sweeteners, glycyrrhizin, xylotol, thaumatin, Lo Han, neotame, tagatose and trehalose, and the like.

2. A solid, low calorie, palatable sugar substitute as claimed in claim 1 **characterizing, by** weight:
| | |
|---|---|
| inulin | 31.6% - 38.3% |
| polydextrose | 31.6% - 49% |
| maltodextrin | 12% - 36% |
trace amounts of an antiagglomerant to reduce caking; and the balance being one or more intense sweeteners from the group of sweeteners comprising aspartame, acesulfame-K, cyclamates, saccharin, sucralose, neohesperidin dihydrochalone, alitame, stevia sweeteners, glycyrrhizin, xylotol, thaumatin, Lo Han, neotame, tagatose and trehalose, and the like.

3. A solid, low calorie, palatable sugar substitute as claimed in claim 2 **characterizing, by** weight:
| | |
|---|---|
| inulin | 37.9% |
| polydextrose | 37.6% |
| maltodextrin | 23% |
said antiagglomerant being 0.30%; and
said intense sweetener being approximately 0.2% acesulfame-K and 1.0% neohesperidin dihydrochalone by weight.

4. A solid, low calorie, palatable sugar substitute as claimed in claim 1 wherein said intense sweetener being approximately 0.2% acesulfame-K and 1.0% neohesperidin dihydrochalone by weight.

5. A solid, low calorie, palatable sugar substitute as claimed in claim 2 wherein said intense sweetener being approximately 0.2% acesulfame-K and 1.0% neohesperidin dihydrochalone by weight.

6. A solid, low calorie, chocolate comestible with the sugar substitute of claim 1 **characterizing, by** weight:
| | |
|---|---|
| inulin | 12-20%; |
| polydextrose | 15 - 25%; |
| maltodextrin | 2 - 8%; |
| milk | 0 - 22%; |
| cocoa mass | 10 - 50%; |
| cocoa butter | 8 - 25% ; |
trace amounts of lecithin and flavor; and
and the balance being one or more intense sweeteners from the group of sweeteners comprising aspartame, acesulfame-K, cyclamates, saccharin, sucralose, neohesperidin dihydrochalone, alitame, stevia sweeteners, glycyrrhizin, xylotol, thaumatin, Lo Han, neotame, tagatose and trehalose, and the like.

7. A chocolate comestible as claimed in claim 6 wherein said intense sweetener is acesulfame-K, and neohesperidin dihydrochalone.

8. A solid, low calorie, milk chocolate comestible with the sugar substitute of claim 1 **characterizing, by** weight:
| | |
|---|---|
| inulin | 15.8% |
| polydextrose | 20.8% |
| maltodextrin | 5.00% |
| lecithin | 0.5% |
| milk | 21.8% |
| cocoa mass | 10.9% |
| | |
|---|---|
| cocoa butter | 24.7% |
| flavor | 0.5%, and |
| sucralose | 0.04%. |

9. A solid, low calorie, dark chocolate comestible with the sugar substitute of claim 1 **characterizing, by** weight:
| | |
|---|---|
| inulin | 15.9% |
| polydextrose | 21.9% |
| maltodextrin | 5.0% |
| lecithin | 0.5% |
| cocoa mass | 46.7% |
| cocoa butter | 9.9% |
| flavor | 0.5%, and |
| sucralose | 0.04%. |

10. A solid, low calorie, palatable sugar substitute mix with the sugar substitute of claim 1 **characterizing, by** weight:
49% polydextrose and 38% inulin and 12% maltodextrin, which is utilized in a manufacture of chocolate within the ranges set forth below:
| | |
|---|---|
| inulin | 12-20%; |
| polydextrose | 15 - 25%; |
| maltodextrin | 2 - 8%; |
| milk | 0 - 22%; |
| cocoa mass | 10 - 50%; |
| cocoa butter | 8 - 25% ; |
trace amounts of lecithin and flavor; and
and the balance being one or more intense sweeteners from the group of sweeteners comprising aspartame, acesulfame-K, cyclamates, saccharin, sucralose, neohesperidin dihydrochalone, alitame, stevia sweeteners, glycyrrhizin, xylotol, thaumatin, Lo Han, neotame, tagatose and trehalose, and the like.

11. A method of making a comestible with the sugar substitute of claim 1 characterizing the step of incorporating with said comestible a low calorie, palatable sugar substitute consisting of, by weight:
| | |
|---|---|
| inulin | 21.6% - 48.3% |
| polydextrose | 21.6% - 59% |
| maltodextrin | 2% - 48% |
trace amounts of an antiagglomerant to reduce caking; and the balance being one or more intense sweeteners from the group of sweeteners comprising aspartame, acesulfame-K, cyclamates, saccharin, sucralose, neohesperidin dihydrochalone, alitame, stevia sweeteners, glycyrrhizin, xylotol, thaumatin, Lo Han, neotame, tagatose and trehalose, and the like.

12. A method of making a comestible with a low calorie, palatable sugar substitute as claimed in claim 11 wherein the sugar substitute consisting of, by weight:
| | |
|---|---|
| inulin | 31.6% - 38.3% |
| polydextrose | 31.6% - 49% |
| maltodextrin | 12% - 36% |
trace amounts of an antiagglomerant to reduce caking; and the balance being one or more intense sweeteners from the group of sweeteners comprising aspartame, acesulfame-K, cyclamates, saccharin, sucralose, neohesperidin dihydrochalone, alitame, stevia sweeteners, glycyrrhizin, xylotol, thaumatin, Lo Han, neotame, tagatose and trehalose, and the like.

13. A method of making a comestible with a low calorie, palatable sugar substitute as claimed in claim 12 wherein the sugar substitute consisting of, by weight:
| | |
|---|---|
| inulin | 37.9% |
| polydextrose | 37.6% |
| maltodextrin | 23% |
said antiagglomerant being 0.30%; and said intense sweetener being approximately 0.2% acesulfame-K and 1.0% neohesperidin dihydrochalone by weight.

14. A method of making a chocolate comestible with the sugar substitute of claim 1 characterizing the step of incorporating with said chocolate comestible a low calorie, chocolate consisting of, by weight:
| | |
|---|---|
| inulin | 12-20%; |
| polydextrose | 15 - 25%; |
| maltodextrin | 2 - 8%; |
| milk | 0 - 22%; |
| cocoa mass | 10 - 50%; |
| cocoa butter | 8 - 25% ; |
trace amounts of lecithin and flavor; and
and the balance being one or more intense sweeteners from the group of sweeteners comprising aspartame, acesulfame-K, cyclamates, saccharin, sucralose, neohesperidin dihydrochalone, alitame, stevia sweeteners, glycyrrhizin, xylotol, thaumatin, Lo Han, neotame, tagatose and trehalose, and the like.

15. A method of making a chocolate comestible as claimed in claim 11 wherein said intense sweetener is acesulfame-K, and neohesperidin dihydrochalone.

16. A method of making a chocolate comestible as claimed in claim 12 wherein said intense sweetener is acesulfame-K, and neohesperidin dihydrochalone.

17. A method of making a chocolate comestible as claimed in claim 13 wherein said intense sweetener is acesulfame-K, and neohesperidin dihydrochalone.

18. A method of making a chocolate comestible with the sugar substitute of claim 1 characterizing the step of incorporating with said chocolate comestible a low calorie, milk chocolate consisting of, by weight:
| | |
|---|---|
| inulin | 15.8% |
| polydextrose | 20.8% |
| maltodextrin | 5.00% |
| lecithin | 0.5% |
| milk | 21.8% |
| cocoa mass | 10.9% |
| cocoa butter | 24.7% |
| flavor | 0.5%, and |
| sucralose | 0.04%. |

19. A method of making a chocolate comestible with the sugar substitute of claim 1 characterizing the step of incorporating with said chocolate comestible a low calorie, dark chocolate consisting of, by weight:
| | |
|---|---|
| inulin | 15.9% |
| polydextrose | 21.9% |
| maltodextrin | 5.0% |
| lecithin | 0.5% |
| cocoa mass | 46.7% |
| cocoa butter | 9.9% |
| flavor | 0.5%, and |
| sucralose | 0.04%. |
